Europäisches Patentamt

European Patent Office

Office européen des brevets

(19)

(11) Publication number: **0 116 326**
**B1**

(12) **EUROPEAN PATENT SPECIFICATION**

(45) Date of publication of patent specification: **10.09.86**

(51) Int. Cl.⁴: **B 66 C 1/34,** B 66 C 13/14

(21) Application number: **84100867.5**

(22) Date of filing: **27.01.84**

(54) Hanging device to a transport means, with facilitated hooking and automatic release.

(30) Priority: **04.02.83 IT 1943383**

(43) Date of publication of application:
**22.08.84 Bulletin 84/34**

(45) Publication of the grant of the patent:
**10.09.86 Bulletin 86/37**

(84) Designated Contracting States:
**AT BE CH DE FR GB IT LI LU NL SE**

(56) References cited:
**FR-A-1 229 282**
**FR-A-2 169 291**
**US-A-3 647 170**

(73) Proprietor: **TECNOVAR ITALIANA S.p.A.**
**Via Argiro 95**
**I-70121 Bari (IT)**

(72) Inventor: **Fontana, Ludovico**
**Via P.pe Amedeo, 31**
**Bari (IT)**

(74) Representative: **Faggioni, Giovanmaria, Dr. et al**
**Fumero-Studio Consulenza Brevetti**
**Widenmayerstrasse 4/I**
**D-8000 München 22 (DE)**

Courier Press, Leamington Spa, England.

## Description

The present invention relates to a hanging device with fast hooking and automatic release, particularly for lifting and conveying a container, said device being also apt to transfer to said container electric energy on two or more circuits.

A hanging device of this type can be used in particular, but not exclusively, for hooking and transporting a load with aircraft means, as particularly helicopters, or with landcraft means, when the load consists of a special container or distributor of sundry materials, wherein the distribution is operated under the control of electric pulses sent from the transport means.

A known device of this type, described for example in the Italian Patent No. 953,239 (and FR—A—2,169,291), comprises an eyelet of connection to the helicopter, having an enlarged base with a central hole, into which freely rotates a pin extending downward into a suspension hook. The hook is formed in two parts, one of which is fixedly connected to said pin, while the other rotates in respect of the first about a horizontal axis, placed in correspondence of the lowest part of the hook. Releasable locking means keep said second part of the hook raised, so as to form with the first part an essentially closed hook, which is perfectly apt to support the bracket of a load lifting sling. When desired, said locking means release said second hood part, which oscillates downward and frees said bracket.

This known device is completed by an electric circuit apt to transmit electric signals from the transport means, for instance a helicopter, towards the load, said circuit comprising:

three current feeding brushes, fixedly connected to the connection eyelet, and three slip rings, rotating with said hook support pin, in order to guarantee the feeding of current from the fixed eyelet to the rotating hook, leaving said hook totally free to rotate;

two contact blades, positioned on either side of the hook, whose contacts are apt to cooperate with conductive plates fixed on the two opposite sides of said bracket, in order to guarantee the feeding of current from the rotating hook to the bracket and then from this latter to the hanging container.

A device of this type, though working perfectly, has proved to undergo damage during use. In particular, the contact blades fixed to the hook sides are too exposed to atmospheric agents and to accidental impact, whereby, in a relatively short while, they are no longer apt to guarantee a perfect and safe electric connection, as indispensable.

The object of the present invention is to improve the known hanging device, and in particular to provide the same with a perfect electric connection, guaranteed in time and highly unlikely to undergo damage.

This result is obtained mainly due to the fact that, according to the invention, each of the contacts associated to the rotating hook comprises a contact rod oscillating between a rest position, in which it is housed into a seat formed in an enlarged eyelet base, and an active position, in which it rests onto a respective contact surface provided on the bracket, the movement of the contact rods being controlled by a lever moving under the action of the bracket being carried into the hooking position, and by pressure spring means associated to said lever.

Further characteristics and advantages of the device according to the present invention will anyhow be more evident from the following description of a preferred embodiment thereof, illustated in the accompanying drawings, in which:

Fig. 1 is a side elevation, showing only the suspension hook;

Fig. 2 is a similar view, with the lifting sling bracket hooked onto the suspension hook; and

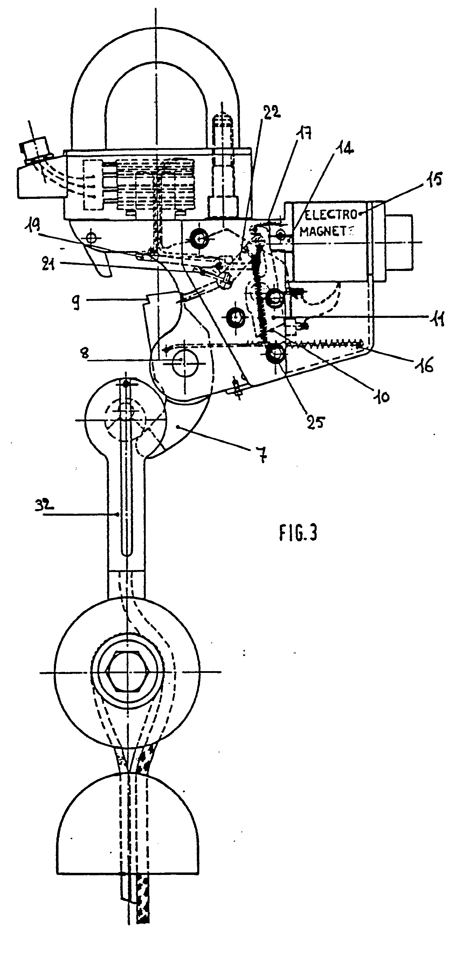

Fig. 3 is a view similar to that of figure 2, with the bracket unhooking from the suspension hook.

As shown, the suspension device comprises a first hook part 1, extending upwards into a pin 2 rotating into an enlarged base 3 of an eyelet 6 of connection to the transport means, specifically a helicopter.

According to a technique known per se, the pin 2 is mounted so as to guarantee on one hand the support of the hook part 1 on the eyelet 6, even under very heavy loads, and on the other hand the free rotation of the hook part 1 in respect of said eyelet 6.

The base 3 includes slip rings 4, with each ring cooperating a fixed contact 5 of the brush type.

As already said, the body 1 forms a first part of the suspension hook, while a second part 7 is rotatably mounted around a pin 8 with horizontal axis, positioned in correspondance of the lower end of the hook part 1.

The hook part 7 extends backwards, beyond the pin 8, into a tailpiece ending with a tooth 9, apt to cooperate with the lower pawl-shaped end 10 of a locking lever 11.

The lever 11 is rotatable about the pin 12, carried by the hook part 1, and its upper end 13 bears onto the outer end of the keeper 14 of an electromagnet 15.

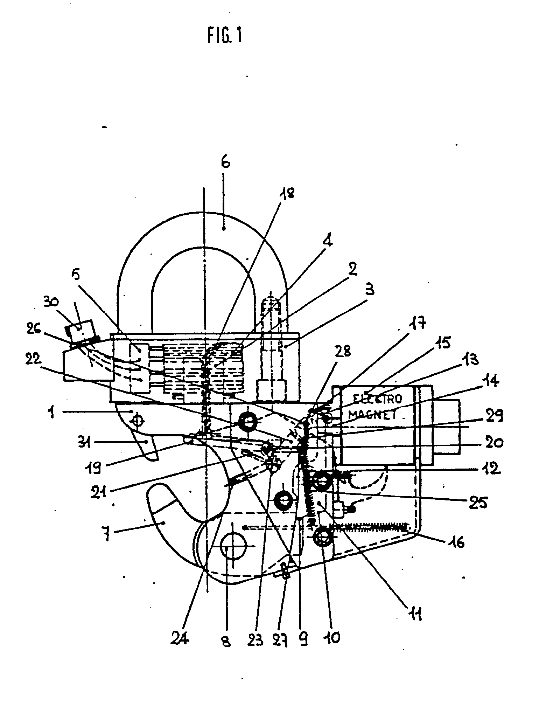

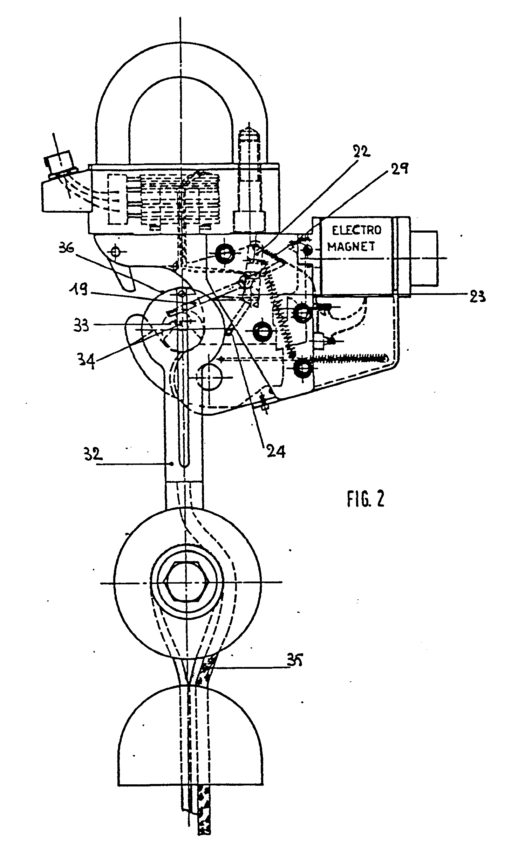

A spring 16, connected on one side of the hook part 1 and on the other side to the hook part 7, is positioned so as to return said hook part 1 to its lifted operating position, shown in figures 1 and 2, wherein the tooth 9 is in engagement with the pawl 10 of the lever 11.

A spring 17, connected between a fixed point of the body 1 and the upper end of the lever 11, returns this latter to its rest position, shown in figure 1, corresponding to the recessed position of the electromagnet keeper 14.

Two contact rods 19 are mounted oscillating about the pin 20 and are normally retained in the rest position, shown in figure 1, in which they are housed into a recessed seat formed in the lower surface of the base 3. To make the drawing more clear, the contact rods 19 are drawn in figure 1 external to said seat, but they disappear into said seat to be fully and efficiently protected, when they are in the rest position.

A rocking lever is rotatably mounted about the pin 23; a spring 25 is connected to a first arm 22 of said lever, causing it to rotate clockwise towards its rest position shown in figure 1. In this position, a second arm 21 of said rocking lever pushes the contact rod 19 towards its lifted rest position. With a third arm 24 of the rocking lever cooperates a bracket for a sling, in the manner better explained hereinafter.

Each contact rod 19 is formed as a two-armed lever: the first arm is the contact arm (the function of which is explained hereinafter), while at the rear end 27 of the second arm there is connected a spring 29. This latter is moreover connected at its other end to the first arm 22 of the rocking lever.

The four fixed contacts 5 are connected on one side to the tap 30 and on the other side, as already said, to the brushes which cooperate with the slip rings 4. From these latter depart four conductors (18), a first conductor being directly connected to the earth of the hook, a second conductor being connected to the electromagnet, while a third and a fourth conductor are connected to the contact rods 19. It is evident that, whenever required, the number of the connections can easily be changed by a technician in the field, with very simple modifications in respect of what is shown by preference in the drawings.

The hook unit is completed by a safety tooth 31 which, working in known manner, may oscillate only counterclockwise, starting from the position shown in figure 1.

A bracket 32, connected to the lifting sling, cooperates with the abovedescribed hook device. The bracket 32 ends at the top with a crosspiece 33 which finds a seat in the hook saddle 1,7. Two contact surfaces 34 are provided on said crosspiece 33, such surfaces being insulated one from the other and from the earth of the bracket. Onto said surfaces 34 bear—in the working conditions described hereinafter— the contact rods 19. From the earth of the bracket 32 and from the two surfaces 34 depart flexible conductors 35 which transmit (in known manner anyhow not forming part of the present invention), electric energy to the hanging container (not shown).

The working of the heretofore described device is as follows: in the rest position shown in figure 1, the contact rods 19 are raised and housed into the seat formed in the base 3. In this position they are perfectly protected from atmospheric agents, as well as from accidental impacts which easily occur during hook shifting operations. In this same rest position, the hook part 7 is held in a raised position by the spring 16 and by engagement of its rear tooth 9 with the pawl end 10 of the lever 11.

Starting from this position, the bracket 32 is placed on the hook 1, 7 causing the oscillation of the safety tooth 31. When the crosspiece 33 of the bracket 32 rests into the hook saddle, the bracket 32 shifts the arm 24 of the rocking lever 22, which oscillates counterclockwise, against the action of the return spring 25, up to the position shown in figure 2.

During said oscillation, the arm 21 of the lever 22 moves downward, so that the contact rods 19 may in turn oscillate counterclockwise to get in touch with the contact surfaces 34 of the crosspiece 33. In this movement the rods 19 are driven by the spring 29, which is stretched by the counterclockwise movement of the lever 22. Said spring 29 then determines the pressure with which the rods 19 bear against the contact surfaces 34.

As can be easily observed, this arrangement allows to obtain, on one hand, that the contact rods 19 by no means interfere with the bracket 32, when this latter starts to introduce itself into the hook 1, 7; while on the other hand, as soon as said bracket moves towards its position of rest into the hook saddle, the contact rods 19 move down towards the crosspiece 33 and bear thereon with a predetermined pressure, so as to guarantee a perfect contact.

For the automatic release of the bracket 32, the electromagnet 15 is energized by means of an electric signal sent in known manner from the transport means, specifically from the helicopter, and fed through one of the contacts 5. Said magnet thus pushes outwards the keeper 14, thereby causing the counterclockwise oscillation of the lever 11. The pawl end 10 of the lever 11 disengages from the tooth 9 of the hook part 7; this latter is then free to rotate counterclockwise—simply under the weight of the bracket 32, which outweighs the action of the spring 16—thereby releasing said bracket 32.

It should be noted that, according to an interesting characteristic of the present invention, the tooth 9 is formed slightly undercut in respect of the pawl end 10 (as appears evident from figures 1 and 2). In this way, when all the load weighs onto the bracket 32—which occurs when the container supported by the sling is still overhung— the pressure transmitted to the hook part 7 and, through this latter, to the tooth 9, is such that the end 10 of the lever 11 is unable to disengage from the tooth 9, even though the electromagnet 15 is energized. This forms a safety against the untimely operation of the magnet before the load is rested on the ground.

It is anyhow understood that the invention is not limited to the particular embodiment described, but that it covers any modifications of the same, which may be introduced by a technician in the field, while remaining within the scope of the expressed inventive idea as claimed.

**Claims**

1. A device for hanging a load, particularly to aircraft or landcraft transport means, of the type comprising an eyelet (6) of connection to the transport means having an enlarged base (3) with a central hole, a pin (2) rotatably supported in said hole and extending downward into a first hook part (1), a second hook part (7) part pivoted on the first about a pin (8) with horizontal axis positioned in the lower end of the first hook part, releasable locking means (9, 11) to retain said second hook part in an active position to form with the first part an essentially closed hook, a bracket (32) for the support of a load lifting sling, and electrical connection means (18, 19, 34) to transmit electric signals from the hook to the bracket, said device being characterized in that said electrical connection means comprise at least one contact rod (19) oscillating between a rest position, in which it is housed into a seat formed in said enlarged base (3), and an active position, in which it bears onto a respective contact surface (34) provided on the bracket (32), said oscillating movement being controlled by a lever (21, 22, 24) moving under the action of the bracket being carried into the hooking position, and by pressure spring means (29) associated to said lever.

2. A device as in claim 1, wherein each contact rod (19) is pivoted into a fixed point (23) of the first hook part (1) and wherein a rocking lever is provided, spring means (25) being associated to a first arm (22) of said rocking lever to return the same in a rest position, while a second arm (21) of said lever cooperates with said contact rod to keep it in a rest position, under the return action of said spring means.

3. A device as in claim 2, wherein said rocking lever comprises a third arm (24), with which cooperates said bracket (32) while it is being hooked, in order to cause the oscillation of the rocking lever and consequently of each contact rod (19), towards an active position.

4. A device as in claim 3, wherein second return spring means (29) are interposed between an arm (22) of said rocking lever and said contact rods (19), to press the latter in an active position of contact.

5. A device as in claim 4, wherein each contact rod (19) is in the form of a two-armed lever, a first extended arm carrying the contact, while to the other arm are connected said second spring means (29), fixed at their other end to the first arm (22) of the rocking lever.

6. A device as in claim 4, wherein said second spring means (29) have a predetermined strength and determine the contact pressure of said contact rods.

7. A device as in claim 1, wherein said means for locking the second hook part consist of a tooth (9) carried by a tailpiece of said hook part (7) and of the pawl (10) end of a locking lever (11), operated by an electromagnet (15), said tooth having an undercut profile for engagement with said pawl end.

**Patentansprüche**

1. Einrichtung zur Anhängung einer Last, insbesondere an Luft- oder Landtransportmittel, einer Art, die eine Verbindungsöse (6) für die Transportmittel aufweist, welche ein vergrößertes Grundteil 3 mit einer zentralen Ausnehmung aufweist, einen Zapfen (2), der drehbar in der Ausnehmung gelagert ist und sich nach unten in einen ersten Hakenteil (1) erstreckt, einen zweiten Hakenteil (7), der drehbar ist an dem ersten Teil um einen Zapfen (8) mit horizontaler Achse, positioniert in dem unteren Ende des ersten Hakenteils, lösbaren Festsetzungsmitteln (9, 11), um den zweiten Hakenteil in einer aktiven Stellung zu halten, um mit dem ersten Hakenteil einen im wesentlichen geschlossenen Haken zu bilden, einen Ausleger (32) für eine Lagerung einer Lastanhebeschlinge, und elektrische Verbindungsmittel (18, 19, 34), um elektrische Signale von dem Haken aud den Ausleger zu übertragen, wobei die Vorrichtung dadurch gekennzeichnet ist, daß die elektrischen Verbindungsmittel zumindest eine Kontaktstange (19) die sich zwischen einer Ruheposition, in welcher sie in einem Sitz aufgenommen ist, der in dem vergrößerten Grundteil (3) ausgebildet ist, und einer aktiven Stellung, in welcher sie gegen eine jeweilige Kontaktfläche (34) stößt, vorgesehen in dem Ausleger (32), sich hin- und herbewegt, wobei die Hin- und Herbewegung durch einen Hebel (21, 22, 24) gesteuert ist, der sich unter der Wirkung des Auslegers bewegt, geführt in die Hakenstellung, und durch Druckfedermittel (29), zugeordnet zu dem Hebel.

2. Vorrichtung nach Anspruch 1, wobei jede Kontakstange (19) in einem Festpunkt (23) des ersten Hakenteils (1) drehbar ist, und wobei ein Hin- und Herbewegungshebel vorgesegen ist, weiter mit Federmitteln (25), die einem ersten Arm (22) des Hin- und Herbewegungshebels zugeordnet sind, um diesen in eine Ruhestellung zurückzubewegen, während ein zweiter Arm (21) des Hebels mit der Kontaktstange zusammenwirkt, um sie in einer Ruhestellung zu halten, unter der Umkehrwirkung der Federmittel.

3. Vorrichtung nach Anspruch 2, wobei der Hin- und Herbewegungshebel einen dritten Arm (34) aufweist, welcher mit dem Ausleger (32) zusannenwirkt, während er eingehakt ist, um die Hin- und Herbewegung des Hebels zu bewirken und folglich jeder Kontakstange (19), in eine aktive Stellung.

4. Vorrichtung nach Anspruch 3, wobei die zweiten Umkehrfedermittel (19) zwischen einem Arm (22) des Hin- und Herbewegungshebels und Kontaktstangen (19) zwischengeschaltet sind, um letztere in eine aktive Kontakstellung zu drücken.

5. Vorrichtung nach Anspruch 4, wobei jede Kontakstange (19) in der Gestalt eines zweiarmigen Hebels ausgebildet ist, wobei ein erster ausladender Arm den Kontakt trägt, während an den anderen Arm die zweiten Federmittel (29) befestigt sind, fest befestigt an ihrem anderen Ende an den ersten Arm (22) des Hebels.

6. Vorrichtung nach Anspruch 4, wobei die zweiten Federmittel (29) eine vorbestimmte Spannung haben und den Kontaktdruck der Kontaktstangen bestimmen.

7. Vorrichtung nach Anspruch 1, wobei die Mittel zur Festsetzung des zweiten Hakenteils aus einem Zahn (9) bestehen, der an einem Endstück des zweiten Hakenteils (7) geführt ist, und aus einem Klauenende (10) eines Hebels (11), betätigt durch einen Elektromagneten (15), wobei der Zahn ein hinterschnittenes Profil hat, für eine Zusammenwirkung mit dem Klauenende.

**Revendications**

1. Dispositif pour la suspension d'une charge, en particulier à un moyen de transport par voie aérienne ou terrestre, du type comprenant un oeillet (6) de raccordement au moyen de transport comportant une base élargie (3) à trou central; un axe (2) tourillonnant dsns ce trou et s'étendant vers le bas dans une première pièce de crochet (1), une seconde pièce de crochet (7) articulée sur la première autour d'un tourillon (8) à axe horizontal placé dans l'extrémité inférieure de la première partie de crochet, un moyen de verrouillage temporaire (9, 11) destiné à retenir ladite seconde pièce de crochet dans une position active pour former avec la première pièce un crochet sensiblement fermé, une boucle (32) pour le support d'une élingue de levage de charge, et des moyens de connexion électrique (18, 19, 34) pour transmettre des signaux électriques du crochet à la boucle, ledit dispositif étant caractérisé en ce que lesdits moyens de connexion électrique comprennent au moins une tige de contact (19) basculant entre une position de repos, dans laquelle elle est logée dans un siège formé dans ladite base élargie (3), et une position active, dans laquelle elle porte contre une surface de contact (34) respective prévue sur la boucle (32), ledit mouvement basculant étant commandé par un levier (21, 22, 24) se déplaçant du fait du passage de la boucle en position d'accrochage, et par des moyens formant ressort presseur (29) associés audit levier.

2. Dispositif selon la revendication 1, caractérisé en ce que chaque tige de contact (19) est articulée en un point fixe (23) de la première pièce de crochet (1) et en ce qu'il est prévu un levier oscillant, un moyen formant ressort (25) étant associé à un premier bras (22) dudit levier oscillant pour ramener celui-ci en position de repos, tandis qu'un second bras (21) dudit levier coopère avec ladite tige de contact pour la maintenir dans une position de repos, sous l'effet de rappel dudit moyen formant ressort.

3. Dispositif selon la revendication 2, caractérisé en ce que ledit levier oscillant comprend un troisième bras (24), avec lequel ladite boucle (32) coopère lors de son accrochage, en vue de faite basculer le levier oscillant et par conséquent chaque tige de contact (19), vers une position active.

4. Dispositif selon la revendication 3, caractérisé en ce que lesdits seconds moyens formant ressort (29) de rappel sont interposés entre un bras (22) dudit levier oscillant et lesdits tiges de contact (19), pour presser celles-ci vers une position active de contact.

5. Dispositif selon la revendication 4, caractérisé en ce que chaque tige de contact (19) est sous la forme d'un levier à deux bras, un premier bras prolongé portant le contact, tandis qu'à l'autre bras sont reliés lesdits seconds moyens formant ressort (29), fixés à leur autre extrémité au premier bras (22) du levier oscillant.

6. Dispositif selon la revendication 4, caractérisé en ce que lesdits seconds moyens formant ressort (29) ont une force déterminée et déterminent la pression de contant des dites tiges de contact.

7. Dispositif selon la revendication 1, caractérisé en ce que lesdits moyens de verrouillage de la seconde pièce de crochet sont formés par une dent (9) portée par une queue de ladite seconde pièce de crochet (7) et par l'extrémité formant clique (10) d'un levier de verrouillage (11), commandé par un électro-aimant (15), ladite dent présentant un profil affouillé pour coopérer avec ladite extrémité de cliquet.

## FIG. 1

FIG. 2

0 116 326

ELECTRO-MAGNET

FIG.3

3